Europäisches Patentamt

European Patent Office

Office européen des brevets

(11) Veröffentlichungsnummer: **0 377 751**
**A1**

(12) **EUROPÄISCHE PATENTANMELDUNG**
veröffentlicht nach Art. 158 Abs. 3
EPÜ

(21) Anmeldenummer: **89906495.0**

(22) Anmeldetag: **03.04.89**

(86) Internationale Anmeldenummer:
**PCT/SU89/00086**

(87) Internationale Veröffentlichungsnummer:
**WO 89/11447 (30.11.89 89/28)**

(51) Int. Cl.⁵: **C01B 21/068**

(30) Priorität: **24.05.88 SU 4422423**

(43) Veröffentlichungstag der Anmeldung:
**18.07.90 Patentblatt 90/29**

(84) Benannte Vertragsstaaten:
**AT CH DE FR GB LI NL SE**

(71) Anmelder: **INSTITUT STRUKTURNOI MAKROKINETIKI AKADEMII NAUK SSSR**
**Moskovskaya olb.**
**Chernogolovka, 142432(SU)**

(72) Erfinder: **MERZHANOV, Alexandr Grigorievich**
**ul. Tretya, 3-2**
**Moskovskaya obl.**
**pos. Chernogolovka, 142432(SU)**
Erfinder: **BOROVINSKAYA, Inna Petrovna ul. Tretya, 3-2**
**Moskovskaya obl.**
**pos. Chernogolovka, 142432(SU)**
Erfinder: **POPOV, Leonid Sergeevich**
**ul. 13 Parkovaya, 27-1-182**
**Moscow, 105215(SU)**
Erfinder: **MAKHONIN, Nikolai Sergeevich**
**pr. Institutsky, 8-139 Moskovskaya obl.**
**pos. Chernogolovka, 142432(SU)**
Erfinder: **KUSTOVA, Lidia Vasilievna ul. Pervaya, 23-35**
**Moskovskaya obl.**
**pos. Chernogolovka, 142432(SU)**

(74) Vertreter: **von Füner, Alexander, Dr.**
**Patentanwälte v. Füner, Ebbinghaus, Finck**
**Mariahilfplatz 2 & 3**
**D-8000 München 90(DE)**

(54) **VERFAHREN ZUR HERSTELLUNG VON SILIZIUMNITRID MIT HOHEM ALPHAGEHALT.**

(57) Die vorliegende Erfindung bezieht sich auf das Gebiet der Herstellung von hochschmelzenden anorganischen Verbindungen, insbesondere auf Verfahren insbesondere auf Verfahren zur Herstellung von Siliziumnitrid mit einem hohen Gehalt an Alfa-Phase. Das Verfahren zur Herstellung von Siliziumnitrid mit einem hohen Gehalt ah Alfa-Phase wird nach der selbstverbreitenden Hochtemperatur-Synthese

durchgeführt. Das Verfahren sieht das kontaktieren des Beschickungsgutes das Siliziumreagens und einen Zusatzstoff enthält, mit einem nietrierenden Medium vor. Man verwendet als Siliziumreagens Metallsilizium und als Zusatzstoff mindestens eines der Ammoniumhalogenide in einer Menge von 1 bis 60%, bezogen auf die Masse des Siliziumreagens. Die Synthese führt man bei einem Druck von 4 bis 30 MPa durch.

# VERFAHREN ZUR HERSTELLUNG VON SILIZIUMNITRID MIT EINEM HOHEN GEHALT AN ALFA-PHASE

## Gebiet der Technik

Die Erfindung bezieht sich auf das Gebiet der Herstellung von hochschmelzenden anorganischen Verbindungen, insbesondere auf Verfahren zur Herstellung von Siliziumnitrid mit einem hohen Gehalt an $\alpha$-Phase.

Durch seine unikalen physikalisch-mechanischen Eigenschaften (hohen Härtegrad, ausreichende Festigkeit und Verschleißfestigkeit, Wärmestabilität, einmalig niedriger thermischer Ausdehnungskoeffizient, Inaktivität in vielen aggressiven Medien, niedriger Reibungskoeffizient und niedrige Dichte, spezifische Halbleitereigenschaften und dielektrische Eigenschaften) findet das Siliziumnitrid bei der Herstellung keramischer Stoffe mit unterschiedlichem Bestimmungszweck seine Anwendung.

Diese Konstruktion-Hochtemperatur-Werkstoffe, Feuerfestmaterialien, Antifriktions- und Werkzeugmaterialien, Sonderwerkstoffe mit hoher elektrischer Festigkeit und Stabilität der dielektrischen Kenndaten in einem umfassenden Bereich, mit wärmeisolierenden und im Gegenteil mit wärmeleitenden Eigenschaften kommen zum Einsatz im Maschinenbau, in der Werkzeugindustrie, in der Metallurgie, Raketentechnik, Elektronik, Elektro- und Radiotechnik und in anderen Zweigen.

## Zugrundeliegender Stand der Technik

Für die Herstellung der Siliziumnitrid-Pulver unter den großtechnischen Bedingungen fanden die Methoden der direkten Synthese in verschiedenen Varianten eine besonders umfassende Anwendung, dabei spielt die Tatsache bei der Entwicklung von Direktmethoden eine bestimmte Rolle, daß die Ausgangsrohstoffe keine difizitäten Stoffe darstellen.

Bekannte Methoden der direkten Synthese von Siliziumnitrid-Pulver nach dem Prinzip der Durchführung der Nitrierung kann man in konventionelle, die besonders entwickelt im großtechnischen Maßstand sind, Methoden der Ofen-Synthese, und in perspektivische Methoden, die relativ vor kurzem entwickelt wurden, plasmochemisches Verfahren und Verfahren der selbstverbreitenden Hochtemperatursynthese (unter Bedingungen des Brennens) (SHS), einteilen.

Die Methode der Ofen-Synthese von Siliziumnitrid-Pulvern beruht auf der Nitrierung des Pulvers des Elementarsiliziums unter Erhitzung in elektrischen Öfen in einem Strom des Stickstoffs oder eines stickstoffhaltigen Gases. Als Varianten dieser Methode existieren Verfahren zur Nitrierung von Siliziumdioxid in einem Gemisch mit einem Reduktionsmittel, vorzugsweise, mit Kohlenstoff.

Verfahren der Nitrierung von Silizium in Öfen sind ziemlich langwierig, in der Regel zweistufig. Die erste Nitrierungsstufe von Siliziumpulver führt man bei Temperaturwerten um 100 bis 250°C unter dem Schmelzpunkt des Siliziums bis zur Erreichung eines 30 bis 40%gen Grades der Bindung des Siliziums mit Stickstoff durch. Diese Stufe dauert von 3 bis 5 Stunden und bis 10 bis 30 Stunden. In der zweiten Stufe erfolgt die endgültige Nitrierung bei einer Temperatur von 1500 bis 1600°C.

Bekannt ist ein besonders hochleistungsfähiges und ziemlich einfaches Verfahren zur Herstellung des Siliziumnitridpulvers mit einem hohen Gehalt an $\alpha$ -Phase durch Ofen-Synthese (EP. A 0186497). Das Verfahren besteht in der Nitrierung des metallischen Siliziums im Strom eines Gases, das Stickstoff enthält, bei einem erniedrigten Partialdruck des Stickstoffs innerhalb von 4 bis 5 Stunden bei Erhitzung in Öfen bei einer Temperatur von 1200 bis 1400°C, dabei wird der Partialdruck des Stickstoffs gleich ~ 0,5 atm (0,05 MPa) solange unterhalten, bis 50 bis 60 Masse% des Siliziums umgesetzt wird. Das Verfahren ermöglicht es, Siliziumnitrid-Pulver mit einem Gehalt an $\alpha$ -Phase von 97 Masse% zu erhalten.

Bei der Herstellung des Siliziumnitrids in diesem Verfahren ist eine strenge Kontrolle der Temperatur, des Partialdruckes des Stickstoffs und der Geschwindigkeit des Gasstroms im Verlaufe der ganzen Prozesses der Nitrierung notwendig, damit die für die Entstehung der $\alpha$ -Phase erforderliche Wärmeführung eingehalten wird und der Exoeffekt der Nitrierung durch Wärmeableitung kompensiert wird. Für die Realisierung dieses Verfahrens ist außerdem ein ziemlich beträchtlicher Stromverbrauch erforderlich, um hohe Temperaturwerte von 1200 bis 1400°C in Elektroöfen erreichen zu können, bei denen die Nitrierung verläuft.

Die Methode der plasmachemischen Synthese, Nitrierung des Siliziums in einem stickstoffhaltigen Niedertemperaturplasma, ist interessant vom Standpunkt der Gewinnung von ultrafeinen Siliziumnitridpulvern, die eine gute Sinterbarkeit besitzen.

Bekannt ist eine plasmachemisches Verfahren zur Herstellung von Siliziumnitrid (Izvestiya Akademii nauk UdSSR, seriya Neorganitcheskie materialy, v. 15, Nr. 4, 1979 (Moskva), G.M.Heideman, J.P.Grabis, T.A. Miller "Vysokotemperaturnyi sintez melkodispersnogo nitrida kremniya, S. 595-598) /Nachrichten der Akademie der Wissenschaften der UdSSR, Serie Anorganische Materialien, Band 15, Nr. 14, 1979, (Moskau), G.M.Heideman, J.P.-Grabis, T.A. Miller "Hochtemperatursynthese von feindispersem Siliziumnitrid", S.595- -598/ durch Nitrierung des Siliziums im Stickstoffplasma, das durch einen Hochfrequenz-Generator erzeugt wird, unter Verwendung des Siliziums mit einem Reinheitsgrad von 98,9% und des Stickstoffs von hohem Reinheitsgrad.

Das gemäß diesem Verfahren gewonnene Pulver des Siliziumnitrids (Gemisch der $\alpha$ - und $\beta$ -Phasen ) enthält von 2 bis 4 Masse% des freien Siliziums und höchstens 5 Masse% Sauerstoff. Die plasmachemischen Pulver des Siliziumnitrids weisen außerdem eine erhöhte chemische Aktivität im Vergleich zu den Pulvern, die in anderen Verfahren gewonnen werden, auf und sie neigen zur Hydrolyse in an der feuchten Luft, was bestimme Maßnahmen bei ihrer Lagerung und Verarbeitung verlangt.

Obwohl die plasmachemischen Pulver eine gute Sinterbarkeit aufweisen, verhindert ihre Qualität auf ihrer Grundlage keramische Stoffe mit einem hohen Grad der physikalisch-mechanischen Eigenschaften zu gewinnen.

Bei der Durchführung der plasmachemischen Synthese, genauso wie bei der Ofensynthese, ist es außerdem ein wesentlicher Stromaufwand notwendig.

Ein besonders perspektivisches Verfahren der Direkt-

synthese des Siliziumnitrids nach dem Reinheitsgrad und nach der Qualität des zu gewinnenden Produktes, nach der Leistung und nach der Energieintensität der Prozeßführung ist ein Verfahren der selbstverbreitenden Hochtemperatur- -Synthese (im Brennbetrieb) (US, A, 3726643).

Dieses Verfahren beruht auf der Verwendung der Wärme der exothermischen Umsetzung der Reagenzien, mindestens eines von denen sich im Kondensationszustand befindet. Das Wesen des Verfahrens besteht in der lokalen Initiierung einer chemischen Reaktion in einer Schicht des Reagenziengemisches und in der weiteren Umsetzung im Brennbetrieb, das heißt der spontanen Verbreitung der Verbrennungsfront infolge einer schichtweisen Eigenerhitzung des Reagenziengemisches bei einem für diesen Prozeß ausreichenden Exoeffekt der Reaktion.

Beträchtlicher Wärmeeffekt der Umsetzung des Siliziums mit Stickstoff (180 kcal/Mol) ermöglicht es, die Nitrie-rung des Siliziums im Brennbetrieb, das heißt im Verfahren der selbstverbreitenden Hochtemperatur-Synthese (SHS), durchzuführen.

Darüber hinaus ist der Exoeffekt der Umsetzung von Silizium mit Stickstoff so groß, daß es für die Unterhaltung der Temperatur der Prozeßführung, die für die Bildung der $\alpha$ -Phase des Siliziumnitrids vorzuziehen ist, notwendig ist, die Brenntemperatur herabzusetzen.

Für die Herabsetzung der Brenntemperatur wird eine Technik der Verdünnung des Ausgangspulvergemisches der Reagenzien (bis zu 50 Masse%) mit Endprodukt angewendet.

Im Verfahren der selbstverbreitenden Hochtemperatur- -Synthese wurde unter Einsatz der Technik der Verdünnung des Ausgangspulvergemisches mit Endprodukt Siliziumnitrid mit einem hohen Gehalt an $\alpha$ -Phase gewonnen (J.Am.Ceram. Soc., v. 69, 4, 1986, (Kiyoshi Hirao, Yoshinary Miyamoto, Mitsue Koizume "Synthesis of Silicon Nitride by a Combustion Reaction under High Nitrogen Pressure", p. 60-61).

Das Verfahren besteht in der Herstellung eines Pulver- -Ausgangsgemisches (Beschickungsgutes) aus Siliziumpulvern (mit einem Reinheitsgrad von 99,9%) mit einem Dispersitäts-

- 5 -

grad von $\leq 5$ m und aus $\alpha$ -Siliziumnitrid (98% $\alpha$ - -Si$_3$N$_4$) mit einem Dispersitätsgrad von $\sim$ 0,1 $\mu$m bei einem Massenverhältnis von 47,4% bzw. 52,6%, in der Zerkleinerung der Komponenten des Beschickungsgutes bis auf einen Dispersitätsgrad von $\sim$ 0,2 $\mu$m durch Vermischen im Azeton, in der Trocknung des Beschickungsgutes im Vakuum, in der Herausbildung von kleinen Zylindern mit einem Durchmesser von 6 mm und einer Höhe von 10 mm, mit einer Dichte von 44 bis 46% der Theorie, und in der Durchführung der Synthese im Brennbetrieb im Stickstoffmedium bei einem Druck von 10 MPA nach einer lokalen Initiierung der Reaktion in einer Schicht des Beschickungsgutes mit einem 3 Sekunden langen elektrischen Impuls.

Durch die Synthese im Brennbetrieb wurde das Siliziumnitrid mit einem Gehalt an $\alpha$ -Phase von 87 Masse% gewonnen.

Bei der Herstellung des Siliziumnitrids nach diesem Verfahren mit einem hohen Gehalt an $\alpha$ -Phase wird bei der Zubereitung des Ausgangsbeschickungsgutes als eine inerte Komponente, die die Temperatur des Brennes herabsetzt, das Siliziumnitridfast mit einem 100%gen Gehalt an $\alpha$ -Phase in einer Menge von 50%, bezogen auf das Ausgangsbeschickungsgut, eingesetzt.

Offenbarung der Erfindung

Der Erfindung liegt die Aufgabe zugrunde, ein solches Verfahren für die Herstellung von Siliziumnitrid mit einem hohen Gehalt an $\alpha$ -Phase zu entwickeln, welches es ermöglicht, ein Endprodukt im Verfahren der selbstverbreitenden Hochtemperatur-Synthese ohne Einsatz defizitärer Rohstoffe herzustellen.

Diese Aufgabe wird dadurch gelöst, daß ein solches Verfahren zur Herstellung von Siliziumnitrid mit einem hohen Gehalt an $\alpha$ -Phase durch selbstverbreitende Hochtemperatur-Synthese vorgeschlagen wird, das die Kontaktierung des Beschickungsgutes, das ein Reagenssilizium und einen Zusatzstoff enthält, mit einem nitrierenden Medium bei erhöhtem Druck, in dem, erfindungsgemäß, man als Reagenssilizium metallisches Silizium und als Zusatzstoff mindestens eines der Ammoniumhalbgenide in einer Menge von 1 bis 60%, bezogen auf die Masse des Reagenssiliziums, verwendet, und man die selbstverbreitende Hochtemperatur-Synthese bei einem Druck von 4 bis 30 MPa durchführt.

Der Druck des nietrierenden Mediums unter 4 MPa führt zur Verringerung der Ausbeute an Siliziumnitrid infolge der Senkung des Nitrierungsgrades von Silizium.

Der Druck des nitrierenden Mediums oberhalb von 30 MPa ist nicht zweckmäßig, weil der Nitrierungsgrad des Siliziums dadurch nichtweiter vergrößert wird.

Die im Verfahren vorgeschlagenen Zusatzstoffe für das Beschickungsgut erfüllen während der Synthese eine doppelte Rolle. Zum ersten stellen sie eine Komponente, das Verdünnungsmittel des Beschickungsgutes dar, das heißt sie senken die Temperatur des Brennes und ermöglichen dadurch, eine für die Bildung der $\alpha$-Phase günstige Temperaturführung einzuhalten.

Der Gehalt an Zusatzstoff unter 1 Masse% führt zur Steigerung der Temperatur des Brennens und zur Dissoziation des Endproduktes, das heißt übersteigt die untere kritische Brennungsgrenze.

Der Gehalt an Zusatzstoff oberhalb von 60% erhöht die obere kritische Verbrennungsgrenze in diesem System (das heißt, daß das Brennen unmöglich wird).

Zum zweiten, sind diese Zusatzstoffe während der selbstverbreitenden Hochtemperatur-Synthese nicht inert. Bei Vergasung in der Verbrennungsfront bilden sie mit dem Silizium Zwischenprodukte, die zur weiteren Bildung des $\alpha$-Siliziumnitrids in der Nachbrennungszone beitragen.

Mit diesem Ziel wird als Zusatzstoff für das Beschikkungsgut eines der Ammoniumhalogenide beziehungsweise ein Gemisch aus Ammoniumhalogeniden verwendet.

Als Ammoniumhalogenid kann man, beispielsweise, Ammoniumfluorid, Ammoniumchlorid und Ammoniumjodid verwenden. Man kann auch Gemische der erwähnten Ammoniumhalogenide in beliebigen Kombinationen verwenden.

Es wird auch empfohlen, als Zusatzstoff Halogenid eines Metalls der I.-III. Gruppe des Periodensystems bei einem Massenverhältnis des Ammoniumhalogenids zum Metallkalogenid gleich 1:0,01 bis 1:1 zusätzlich in das Beschickungsgut einzuführen.

Eine zusätzliche Einführung von Halogenid eines Metalls der I.-III. Gruppe des Periodensystems als Zusatzstoff in das Beschickungsgut ermöglicht es, $\alpha$-Siliziumnitrid zu gewinnen, das eine gute Sinterbarkeit aufweist.

Für die Erhöhung des Gehalts an $\alpha$-Siliziumnitrid im Endprodukt ist es zweckmäßig, als ein Reagenssilizium zusätzlich amorphes Silizium und/oder Siliziumimid in einer Menge von 5 bis 95%, bezogen auf die Masse des Metallsiliziums, in das Beschickungsgut einzuführen, wobei bei der Verwendung des amorphen Siliziums und des Siliziuminids ihre Menge entweder gleich untereinander ist oder eines von ihnen im zehnfachen Überschuß gegenüber dem anderen ge-nommen wird.

Die Einführung des amorphen Siliziums, genauso wie des Siliziumimids, führt zur Erhöhung der Reaktionsfähigkeit des jeweiligen Siliziumregans, was es ermöglicht, die Synthese im Brennbetrieb bei einer niedrigeren Temperatur durchzuführen.

Der Gehalt an amorphem Silizium und/oder an Siliziumimid unter 5 Masse% gewährleistet nicht einen ausreichend hohen Gehalt an $\alpha$-Phase im Endprodukt, der Gehalt an amorphen Silizium und/oder am Siliziumimid oberhalb von 95 Masse% ist unzweckmäßig, weil dieser keine weitere Steigerung der Ausbeute an Endprodukt herbeiführt.

Bei der Verwendung des amorphen Siliziums und des Siliziumimids kann ihr Massenverhältnis entweder gleich untereinander sein oder eines von ihnen im zehnfachen Überschuß gegenüber dem anderen genommen werden, was als optimal erscheint.

Mit dem Ziel der Senkung der Verbrennungstemperatur bei der selbstverbreitenden Hochtemperatur-Synthese ist es zweckmäßig, den Prozeß im Strom eines nitrierenden Mediums zu führen, wenn das Siliziumreagens für 40 bis 60% umgesetzt wird. Diese Grenze ist für die Herbeiführung der selbstverbreitenden Hochtemperatur-Synthese im Strom eines nitrie-renden Mediums optimal.

Zweckmäßigerweise soll als nitrierendes Medium Ammoniak, Stickstoff, Stickstoff im Gemisch mit 1 bis 30 Vol.% des Ammoniaks, Wasserstoff, Halogen, Halogenwasserstoff, Argon verwendet werden, die einzeln beziehungsweise in Kombination miteinander genommen werden.

Die selbstverbreitenden Hochtemperatur-Synthese kann bei der Verwendung des flüssigen Stickstoffs als nitrierendes Medium realisiert werden.

Es wird empfohlen, mit dem Ziel der Erhöhung der Ausbeute an Endprodukt das Metallsilizium vorher der chemischen beziehungsweise der physikalischen Einwirkung auszusetzen. Durch solche Bearbeitungen wird die Reaktionsfähigkeit des Siliziums erhöht. Das erlaubt auch, die Synthese bei einer niedrigeren Temperatur durchzuführen.

Man kann auch das Metallsilizium mit Flußsäure behandeln. Die Behandlung des Siliziums führt man in einem Fluor-Plast-Gefäß mit einer verdünnten Säure unter Vermischen durch.

Man kann auch das Metallsiliziumvorher der Einwirkung des Ultraschalls, der Stoß-Wellen-Einwirkung oder Vibrodispergierung in konventionellen Methodiken aussetzen.

Die Behandlung des Metallsiliziums mit Ultraschall besteht in der Einwirkung eines Ultraschallfeldes auf Siliziumpulver.

Die Bearbeitung mit Stoß-Wellen-Einwirkung besteht in der Einwirkung einer Stoßwelle, die bei der Explosion eines Sprengstoffes entsteht, auf eine nichtzerstörbare Kapsel mit Siliziumpulver.

Die Bearbeitung des Metallsiliziums mit Vibrodispergierung besteht im Durchsieben des Siliziumpulvers durch eine Schicht vibrierender Kugeln in einer Zerkleinerungsmaschine vom Typ einer Desintegrationsmühle.

Das erfindungsgemäße Verfahren zur Herstellung von Siliziumnitrid mit einem hohen Gehalt an $\alpha$ -Phase ermöglicht es, das Endprodukt mit einem Gehalt an $\alpha$ -Phase bis 95% mit einer guten Sinterbarkeit und einer geringen Sinterungsschwindung herzustellen.

Das Verfahren erfordert komplizierte Ausrüstungen, defizitären Rohstoff und elektrische Energie großen Energieaufwand nicht. Die der ursprünglichen Initierung der che-
mischen Reaktion in der Schicht des Beschickungsgutes mit
einem elektrischen Impuls ist sehr gering.

Beste Ausführungsvariante der Erfindung

Das Verfahren zur Herstellung von Siliziumnitrid mit
einem hohen Gehalt an $\alpha$ -Phase ist einfach in technoloscher Hinsicht und wird wie folgt realisiert.

Das Beschickungsgut wird durch Vermischen der Ausgangskomponenten in einer Kugelmühle innerhalb von 20 Minuten hergestellt.

In der Kugelmühle vermischt man das Pulver des Metallsiliziums mit einem Dispersitätsgrad von $\leq 10$ $\mu$m und
Ammoniumhalogenid beziehungsweise ein Gemisch der Ammoniumhalogenide.

Das hergestellte Beschickungsgut wird in einer Reaktor auf eine feuerfeste poröse Unterlage aufgegeben. Der
Reaktor stellt ein Hochdruckgefäß aus nichtrostendem Stahl
mit einem Wassermantel zur Kühlung dar.

Der Reaktor wird mit gasförmigem Ammoniak oder Stickstoff, oder mit Stickstoff im Gemisch mit 1 bis 30 Vol.%
Ammoniak, Wasserstoff, Halogen, Halogenwasserstoff, Argon
ausgefüllt, die einzeln oder in Kombination miteinander
unter einem Druck von 4 bis 30 MPa genommen werden.

Dann erfolgt die ursprüngliche Initiierung der chemischen Raktion in einer kleinen Schicht des Beschickungsgutes. Hierfür wird einer elektrischen Spirale aus Wolframdraht mit einem Durchmesser von 25 mm ein kurzzeitiger
Stromimpuls (5 bis 10 s) mit einer Spannung von 20 bis 50 V
und einer Stromstärke von 30 bis 70 A zugeführt. Die glühende Spirale erhitzt die angrenzende Schicht des Beschickungsgutes auf eine hohe Temperatur, bei der die Umsetzung
des Siliziums mit Stickstoff beginnt, und im weiteren verbreitet sich die chemische Reaktion im Beschickungsgut im
Betrieb einer schichtweisen Verbrennung mit einer Geschwindigkeit der Verbreitung der Verbrennungswelle in dem gegebenen System von 0,5 bis 2,0 mm/s (in Abhängigkeit von
der Zusammensetzung des Beschickungsgutes und des nitrierenden Mediums).

enden Mediums).

In der Verbrennungsfront erfolgt die Vergasung von Zusatzstoffen, was einerseits zur Temperatursenkung der Verbrennung und andererseits zur Bildung von Zwischenprodukten der Reaktion führt, die das $\mathcal{L}$ - Siliziumnitrid in der Nachbrennungszone bilden. Die Synthesedauer im Brennbetrieb beträgt 20 bis 30 Minuten. Nach der Beendigung der Synthese und nach der Abkühlung des Reaktors wird der Druck in demselben bis zum atmosphärischen Druck erniedrigt und das Endprodukt wird in Form von Sintergut ausgeladen. Die Außenschicht des Sintergutes wird von den Produkten der nichtvollständigen Verbrennung gereinigt.

Bei der Verwendung des amorphen Siliziums und/oder Siliziumimids und der Halogenide eines Metalls der I. -III. Gruppe des Periodensystems werden diese in das Beschickungsgut in der Stufe seiner Zubereitung beim Vermischen der Ausgangskomponenten in einer Kugelmühle eingeführt.

Die selbstverbreitende Hochtemperatur-Synthese des Siliziumnitrids im Strom eines nitrierenden Mediums wird wie folgt realisiert.

Es wird in einen Reaktor das zubereitete Beschickungsgut aufgegeben, der Reaktor wird mit nitrierendem Gas unter einem Druck von 4 bis 30 MPa ausgefüllt und dann erfolgt das Initiierung der chemischen Reaktion mit einem Stromimpuls, analog dem obenbeschriebenen. Nachdem 40 bis 60% des Reagenssiliziums umgesetzt werden, oder mit anderen Worten gesagt, wenn die Reaktion der Verbrennung ungefähr zur Halfte zustandekommt, beginnt man das Durchblasen des nitrierenden Gases mit der gewählten Geschwindigkeit.

Die Kontrolle des Grades des Verlaufs der Verbrennung führt man je nach der Dauer der Reaktion durch die man nach der bekannten Geschwindigkeit des Brennens in diesem System berechnen kann. Die optimale Geschwindigkeit des Stromes des nitrierenden Mediums ist gleich 4 bis 8 l/min.

Nach der Beendigung der Synthese und nach der Abkühlung des Reaktors wird der Druck bis auf den atmosphärischen Druck herabgesetzt und das Syntheseprodukt herausgeholt.

- 11 -

Bei der Verwendung des flüssigen Stickstoffs als nitrierendes Medium verläuft der Verbrennungsprozeß unter Stickstoffsdruck, der in den Poren des Beschickungsgutes infolge einer hohen Temperatur des Exoeffektes der Reaktion entsteht.

Die Prozeßführung wird wie folgt durchgeführt.
Das hergestellte Beschickungsgut wird auf eine feuerfeste Unterlage untergebracht und in einen Reaktor aufgegeben, der in Form des Dewar-Gefäßes ausgeführt ist. Der Reaktor wird mit flüssigem Stickstoff ausgefüllt und es wird das Initiieren der chemischen Reaktion mit einem Stromimpuls vorgenommen.

Nach der Beendigung der Reaktion und der Abkühlung wird Reaktors geöffnet und das Syntheseprodukt herausgeholt.

Zur besseren Erläuterung der vorliegenden Erfindung werden nachstehende konkrete Beispiele angeführt.

Den Gehalt an $\alpha$-Phase im Siliziumnitrid ermittelte man röntgenografisch und den Gehalt an freiem Silizium durch die Methode der chemischen Analyse (durch volumenometrische Ermittlung des Wasserstoffs, der aus einer Alkalilösung mit Silizium ausgeschieden wird).

Beispiel 1

Man stellt ein Beschickungsgut aus dem Pulver des Metallsiliziums mit Zusatz von Ammoniumfluorid in einer Menge von 60 Masse%, besogen auf die Siliziummasse. her.

Hierfür vermischt man in einer Kugelmühle innerhalb von 20 Minuten 3000 g Metallsilizium und 1800 g Ammoniumfluorid. Das zubereitete Beschickungsgut wird in einen Reaktor auf eine poröse feuerfeste Unterglage aufgegeben. Der Reaktor wird mit gasförmigem Stickstoff unter einem Druck von 10 MPa ausgefüllt. Dann wird die chemische Reaktion durch die Zuführung eines Stromimpulses mit einer Stromstärke von 30 bis 70 A und einer Spannung von 20 bis 50 V innerhalb von 5 bis 10 Sekunden einer elektrischen Spirale aus Wolframdraht mit einem Durchmesser von 25 mm initiiert. Die glühende Spirale erhitzt die mit ihr angrenzende Schicht des Beschickungsgutes bis auf eine Temperatur, bei der die Umsetzung des Siliziums mit dem Stickstoff unter Wärmeentwicklung beginnt. Im weiteren verläuft die chemische Reaktion im selbstverbreitenden Betrieb der schichtweisen Verbrennung. Nach der Beendigung der Verbrennung und nach der Kühlung des Reaktors wird der Druck bis zum atmosphärischen Druck herabgesetzt und das Syntheseprodukt herausgeholt. Die Außenschicht wird von den Produkten der nichtvollständigen Verbrennung gereinigt. Der Gehalt des Siliziumnitrids an $\alpha$ -Phase beträgt 88 Masse% und der Gehalt an freiem Silizium beträgt 1,0 Masse%.

Beispiel 2

Man stellt ein Beschickungsgut aus 95 Masse% Metallsilizium und 5 Masse% amorphem Silizium mit einem Zusatstoff her, der in einer Menge von 60%, bezogen auf die Masse des Reagenssiliziums genommen wird. Als Zusatzstoff verwendet man Ammoniumfluorid.

Das durch Vermischen der Pulver zubereitete Beschickungsgut wird in einen Reaktor aufgegeben, der Reaktor wird mit Stickstoff bis zu einem Druck von 10 MPa ausgefüllt, dann wird die chemische Reaktion initiiert und den Prozeß führt man weiter wie in Beispiel 1 beschrieben.

Der Gehalt des Siliziumnitrids an $\alpha$ -Phase beträgt 89 Masse% und der Gehalt an freiem Silizium beträgt 0,2 Masse%.

Beispiel 3

Man stellt ein Beschickungsgut aus 95 Masse% Metallsilizium und 5 Masse% Siliziumimid mit einem Zusatzstoff her, der in einer Menge von 40%, bezogen auf die Masse des Reagenssiliziums genommen wird. Als Zusatzstoff verwendet man ein Gemisch des Ammoniumfluorids und des Ammoniumchlorids bei einem Massenverhältnis derselben 1:1. Als Zusatzstoff verwendet man auch Aluminiumfluorid bei einem Massenverhältnis Gemisch der Ammoniumhalogenide: Aluminiumfluorid gleich 1:0,01.

Das durch Vermischen der Pulver des Metallsilizium, Siliziumimids, Ammoniumfluorids, Ammoniumchlorids und Aluminiumfluorids hergestellte Beschickungsgut wird in einen Reaktor aufgegeben, der Reaktor wird mit Stickstoff unter

- 13 -

einem Druck von 15 MPa ausgefüllt und die Prozeßführung erfolgt weiter wie in Beispiel 1 beschrieben.

Der Gehalt des Siliziumnitrids an $\alpha$ -Phase beträgt 93 Masse% und der an freiem Silizium - 0,07 Masse%.

Beispiel 4

Man stellt ein Beschickungsgut aus 5 Masse% Metallsiliziums und 95 Masse% amorphem Silizium mit einem Zusatzstoff her, der in einer Menge von 1 %, bezogen die Masse des Reagenssiliziums genommen wird. Als Zusatzstoff verwendet man ein Gemisch aus Ammoniumfluorids mit Ammoniumchlorid bei ihrem Massenverhältnis 1:1.

Das durch Vermischen der Pulver des Metallsiliziums, des amorphen Siliziums, des Ammoniumfluorids und Ammoniumchlorids hergestellte Beschickungsgut wird einem Reaktor aufgegeben. Der Reaktor wird mit Stickstoff im Gemisch mit 30 Vol.% Argon bei einem Druck von 30 MPa ausgefüllt. Die Prozeßführung erfolgt weiter wie in Beispiel 1 beschrieben.

Der Gehalt des Siliziumnitrids an $\alpha$ -Phase beträgt 88 Masse% und der an freiem Silizium - 1 Masse%.

Beispiel 5

Man stellt ein Beschickungsgut durch Vermischen von 45 Masse% Metallsilizium, 50 Masse% amorphem Silizium und 5 Masse% Siliziumimid mit einem Zusatzstoff her, der in einer Menge von 40%, bezogen auf die Masse des Reagenssiliziums, genommen wird. Als Zusatzstoff verwendet man ein Gemisch aus Ammoniumfluorid mit Kaliumchlorid bei ihrem Massenverhältnis 1:0,1.

Das hergestellte Beschickungsgut wird in einen Reaktor aufgegeben, der Reaktor wird mit Stickstoff in einem Gemisch mit 10 Vol.% Ammoniak unter einem Druck von 12 MPa ausgefüllt. Weiter erfolgt die Prozeßführung wie in Beispiel 1 beschrieben.

Der Gehalt des Siliziumnitrids an $\alpha$ -Phase beträgt 95 Masse% und der an freiem Silizium - 0,15 Masse%.

Beispiel 6

Man stellt ein Beschickungsgut aus 45 Masse% Metallsilizium, 5 Masse% amorphem Silizium, 50 Masse% Siliziumimid mit einem Zusatzstoff zu, der in einer Menge von 5%, bezogen auf die Masse des Reagenssiliziums genommen wird, her. Als Zusatzstoff verwendet man ein Gemisch aus Ammoniumfluorid mit Ammoniumchlorid bei ihrem Massenverhältnis 2:1. Als Zusatzstoff wird auch Natriumfluorid bei einem Massenverhältnis Ammoniumhalogenide:Natriumfluorid gleich 1:0,1 verwendet. Das hergestellte Beschickungsgut wird in einen Reaktor aufgegeben, der Reaktor wird mit Stickstoff im Gemisch mit 5 Vol.% Wasserstoff bei einem Druck von 10 MPa ausgefüllt. Weiter erfolgt die Prozeßführung wie in Beispiel 1 beschrieben.

Der Gehalt an des Siliziumnitrids $\alpha$ -Phase beträgt 95 Masse% und der an freiem Silizium - 0,06 Masse%.

Beispiel 7

Man stellt ein Beschickungsgut aus 90 Masse% Metallsilizium und 10 Masse% amorphem Silizium mit einem Zusatzstoff her, der in einer Menge von 25%, bezogen auf die Masse des Reagenssiliziums genommen wird. Als Zusatzstoff verwendet man ein Gemisch aus Ammoniumfluorid mit Ammoniumchlorid bei ihrem Massenverhältnis 1:1.

Das hergestellte Beschickungsgut wird in einen Reaktor aufgegeben, der Reaktor wird mit Stickstoff bei einem Druck von 4 MPa ausgefüllt und man initiiert die chemische Reaktion.

Nachdem die Verbrennungsfront sich für 40% im Beschickungsgut verbreitet hat, das heißt in 15 Minuten nach dem Beginn des Brennens, beginnt man mit dem Durchblasen des Stickstoffs durch den Reaktor mit einer Geschwindigkeit von 6 l/min. Nach der Beendigung des Brennungsprozesses wird weiter wie in Beispiel 1 verfahren.

Der Gehalt des Siliziumnitrids an $\alpha$ -Phase beträgt 94 Masse% und der an freiem Silizium - 0,1 Masse%.

Beispiel 8

Man stellt ein Beschickungsgut der gleichen Zusammensetzung wie in Beispiel 7 her und gibt man dem Reaktor auf. Der Reaktor wird mit Stickstoff unter einem Druck von 4 MPa ausgefüllt und man initiiert eine chemische Reaktion.

Nachdem sich der Verbrennungsfront für 60% im Be-

- 15 -

schickungsgut verbreitet hat, das heißt in 20 Minuten nach dem Beginn des Brennes, beginnt man mit dem Durchblasen des Stickstoffs durch den Reaktor mit einer Geschwindigkeit von 6 1/min. Nach der Beendigung des Brennprozesses wird wie in Beispiel 1 beschrieben verfahren.

Der Gehalt des Siliziumnitrids an $\alpha$-Phase beträgt 94 Masse% und der an freiem Silizium - 0,15 Masse%.

Beispiel 9

Man stellt ein Beschickungsgut aus 95 Masse% Metallsilizium, aus 2,5 Masse% amorphem Silizium und 2,5 Masse% Siliziumimid mit einem Zusatzstoff her, der in einer Menge von 30%, bezogen auf die Masse des Reanssiliziums genommen wird. Als Zusatzstoff verwendet man ein Gemisch aus Ammoniumfluorid und Ammoniumchlorid bei ihrem Massenverhältnis 10:1.

Das hergestellte Beschickungsgut wird in einen Reaktor aufgegeben, der Reaktor wird mit Stickstoff im Gemisch mit 10 Vol.% Chlorwasserstoff unter einem Druck von 20 MPa ausgefüllt und weiter erfolgt die Prozeßführung wie in Beispiel 1 beschrieben.

Der Gehalt des Siliziumnitrids an $\alpha$-Phase beträgt 93 Masse% und der an freiem Silizium - 0,07 Masse%.

Beispiel 10

Man stellt ein Beschickungsgut aus 70 Masse% Metallsilizium und 30 Masse% amorphem Silizium mit einem Zusatzstoff her, der in einer Menge von 30%, bezogen auf die Masse des Reagenssiliziums, genommen wird. Als Zusatzstoff verwendet man ein Gemisch aus Ammoniumfluorid, Ammoniumchlorid und Ammoniumjodid bei ihrem Masseverhältnis 1:1:1.

Das hergestellte Beschickungsgut wird in einen Reaktor aufgegeben, der Reaktor wird mit Stickstoff bei einem Druck von 15 MPa ausgefüllt.

Im weiteren wird wie in Beispiel 1 beschrieben verähren.

Der Gehalt des Siliziumnitrids an $\alpha$-Phase beträgt 95 Masse% und der an freiem Silizium - 0,07 Masse%.

Beispiel 11

Man stellt ein Beschickungsgut aus 50 Masse% Metallsilizium und aus 50 Masse% amorphem Silizium mit einem Zusatzstoff, der in einer Menge von 20%, bezogen auf die Masse des Reagenssiliziums, genommen wird. Als Zusatzstoff verwendet man ein Gemisch aus Ammoniumfluorid und Ammoniumchlorid bei ihrem Messenverhältnis 1:1. Als Zusatzstoff verwendet man auch Magensiumfluorid bei einem Massenverhältnis des Gemisches Ammoniumhalogenide : Magnesiumfluord gleich 1:0,1.

Das hergestellte Beschickungsgut wird in einen Reaktor aufgegeben, der Reaktor wird mit Ammoniak bis zu einem Druck von 8 MPa ausgefüllt und weiterhin erfolgt die Prozeßführung wie in Beispiel 1 beschrieben.

Der Gehalt des Siliziumnitrids an $\alpha$ -Phase betrgät 95 Masse% und der an freiem Silizium - 0,06 Masse%.

Beispiel 12

Man stellt ein Beschickungsgut aus 60 Masse% Metallsilizium und aus 40 Masse% amorphem Silizium mit einem Zusatzstoff her, der in einer Menge von 15%, bezogen auf die Masse des Reagenssiliziums, genommen wird. Als Zusatzstoff verwendet man ein Gemisch aus Ammoniumchlorid mit Magnesiumfluorid bei ihrem Massenverhältnis 1:1.

Das hergestellte Beschickungsgut wird in einen Reaktor aufgegeben, der Reaktor wird mit Stickstoff im Gemisch mit 5 Vol.% Wasserstoff und 20 Vol. Argon unter einem Druck von 20 MPa ausgefüllt. Im weiteren erfolgt die Prozeßführung wie in Beispiel 1 beschrieben. Der Gehalt des Siliziumnitrids an $\alpha$ -Phase beträgt 93 Masse% und der an freiem Silizium - 0,15 Masse%.

Beispiel 13

Man stellt ein Beschickungsgut aus 70 Masse% Metallsilizium und aus 30 Masse% Silizium mit einem Zusatzstoff her, der in einer Menge von 35%, bezogen auf die Masse des Reagenssiliziums genommen wird. Als Zusatzstoff verwendet man ein Gemisch aus Ammoniumfluorid und Kalziumfluorid bei ihrem Massenverhältnis 1:0,1.

Das hergestellte Beschickungsgut wird in einen Reaktor aufgegeben, der Reaktor wird mit Stickstoff im Gemisch mit 1 Vol. Chlor bei einem Druck von 15 MPa ausgefüllt.

- 17 -

Im weiteren erfolgt die Prozeßführung wie in Beispiel 1 beschrieben.

Der Gehalt des Siliziumnitrids an $\alpha$ -Phase beträgt 94 Masse% und der an freiem Silizium - 0,06 Masse%.

Beispiel 14

Man stellt ein Beschickungsgut aus 80 Masse% Metallsilizium und aus 20 Masse% amorphem Silizium mit einem Zusatzstoff her, der in einer Menge von 35%, bezogen auf die Masse des Reagenssilizium, genommen wird. Als Zusatzstoff verwendet man ein Gemisch aus Ammoniumfluorid und Ammoniumchlorid bei ihrem Massenverhältnis 1:1.

Das hergestellte Beschickungsgut wird in einen Reaktor aufgegeben und der Reaktor wird mit flüssigem Stickstoff ausgefüllt. Dann initiiert man eine chemische Reaktion in der Schicht des Beschickungsgutes mit einem Stromimpuls, wie in Beispiel 1 beschrieben. Infolge einer hohen Temperatur, die durch den Exoeffekt sich entwickelt, entsteht in den Poren des Beschickungsgutes der Stickstoffdruck von nichstens 30 MPa und im weiteren verbreitet sich die Reaktion in dem Beschickungsgut im selbstverbreitenden Brennbetrieb.

Nach der Beendigung des Brennprozesses wird das Syntheseprodukt herausgeholt.

Der Gehalt des Siliziumnitrids an $\alpha$ -Phase beträgt 90 Masse% und der an freiem Silizium - 0,1 Masse%.

Beispiel 15

Man stellt ein Beschickungsgut aus 80 Masse% Metall-silizium, das mit Flußsäure behandelt wird, und aus 20 Masse% amorphem Silizium mit einem Zusatzstoff her, der in einer Menge von 35%, bezogen auf die Masse des Reagenssiliziums, genommen wird. Als Zusatzstoff verwendet man ein Gemisch aus Ammoniumchlorid und Ammoniumjodid bei ihrem Massenverhältnis 10:1.

Das hergestellte Beschickungsgut wird in einen Reaktor aufgegeben, der Reaktor wird mit Stickstoff bei einem Druck von 15 MPa ausgefüllt. Im weiteren erfolgt die Prozeßführung, wie in Beispiel 1 beschrieben.

Der Gehalt des Siliziumnitrids an $\alpha$ -Phase beträgt

91 Masse% und der an freiem Silizium - 0,1 Masse%.

Beispiel 16

Man stellt ein Beschickungsgut aus 80 Masse% Metallsilizium, das der Stoß-Wellen-Einwirkung ausgesetzt wird, und aus 20 Masse% amorphem Silizium mit einem Zusatzstoff her, der in einer Menge von 35%, bezogen auf die Masse des Reagenssiliziums, genommen wird. Als Zusatzstoff verwendet man ein Gemisch aus Ammoniumfluorid mit Ammoniumjodid bei ihrem Massenverhältnis 10:1.

Das hergestellte Beschickungsgut wird in einen Reaktor aufgegeben, und die Prozeßführung erfolgt weiter, wie in Beispiel 1 beschrieben.

Der Gehalt des Siliziumnitrids an $\alpha$ -Phase beträgt 91 Masse% und der an freiem Silizium - 0,15 Masse%.

Beispiel 17

Man stellt ein Beschickungsgut aus 80 Masse% Metallsilizium, das mit Ultraschall behandelt wird, und aus 20 Masse% amorphem Silizium mit einem Zusatz von Ammoniumchlorid in einer Menge von 35%, bezogen auf die Masse des Reagenssiliziums.

Das hergestellte Beschickungsgut wird in einen Reaktor aufgegeben und der Reaktor wird mit Stickstoff im Gemisch mit 5 Vol.% Wasserstoff unter einem Druck von 15 MPa ausgefüllt. Im weiteren erfolgt die Prozeßführung wie in Beispiel 1 beschrieben.

Der Gehalt des Siliziumnitrids an $\alpha$ -Phase beträgt 92 Masse% und der an freiem Silizium - 0,1 Masse%.

Beispiel 18

Man stellt ein Beschickungsgut aus 80 Masse% Metallsilizium, das mittels Vibrodispergierung in einer Vibrationsmühle behandelt wird, und aus 20 Masse% amorphem Silizium mit einem Zusatz von Ammoniumfluorid her, das in einer Menge von 35%, bezogen auf die Masse des Reagenssiliziums, genommen wird. Das hergestellte Beschickungsgut wird in einen Reaktor aufgegeben und der Reaktor wird mit Stickstoff im Gemisch mit 5 Vol.% HCl unter einem Druck von 15 MPa ausgefüllt. Im weiteren erfolgt die Prozeßführung wie in Beispiel 1 beschrieben.

Der Gehalt des Siliziumnitrids an $\alpha$ -Phase beträgt 92 Masse% und der an freiem Silizium - 0,08 Masse%.

Beispiel 19

Man stellt ein Beschickungsgut aus 5 Masse% Metallsilizium, aus 50 Masse% amorphem Silizium und aus 45 Masse% Siliziumimid mit Zusatz von Ammoniumfluorid in einer Menge von 5%, bezogen auf die Masse des Reagenssiliziums, her.

Das hergestellte Beschickungsgut wird in einen Reaktor aufgegeben und der Reaktor wird mit Stickstoff bei einem Druck von 15 MPa ausgefüllt. Im weiteren erfolgt die Prozeßführung wie in Beispiel 1 beschrieben. Der Gehalt des Siliziumnitrids an $\alpha$ -Phase beträgt 95 Masse% und der an freiem Silizium - 0,05 Masse%.

Gewerbliche Anwendbarkeit

Das vorgeschlagene Verfahren zur Gewinnung von Siliziumnitrid mit einem hohen Gehalt an Alfa-Phase kann in der Pulvermetallurgie bei der Herstellung von Hochtemperatur- -Konstruktionskeramik (beispielsweise, von Motoreneinzelteilen), von Werkzeugkeramik, von Antifriktions- und Sonderstoffen Anwendung finden, die eine hohe elektrische Festigkeit und die Stabilität dielektrischer Kennlinien besitzen.

PATENTANSPRÜCHE

1. Verfahren zur Herstellung von Siliziumnitrid mit einem hohen Gehalt an Alfa-Phase unter Zuhilfenahme der selbstverbreitenden Hochtemperatursynthese, das das Kontaktieren eines Beschickungsgutes, das ein Reagenssilizium und einen Zusatzstoff enthält, mit einem nitrierenden Medium bei erhöhtem Druck vorsieht, d a d u r c h g e k e n n z e i c h n e t, daß man als Reagenssilizium Metallsilizium verwendet und als Zusatzstoff mindestens eines der Ammoniumhalogenide in einer Menge von 1 bis 60%, bezogen auf die Masse des Reagenssiliziums, verwendet, und man die selbstverbreitende Hochtemperatur-Synthese bei einem Druck von 4 bis 30 MPa durchführt.

2. Verfahren nach Anspruch 1, d a d u r c h g e k e n n z e i c h n e t, daß das Beschickungsgut als Reagenssilizium zusätzlich amorphes Silizium und/oder Siliziumimid in einer Menge von 5 bis 95%, bezogen auf die Masse des Metallsiliziums, enthält, wobei bei der Verwendung des amorphen Siliziums und des Siliziumimids ihre Menge entweder gleich ist oder in einem zehnfachen Überschuß des einen gegenüber dem anderen genommen wird.

3. Verfahren nach Anspruch 1, d a d u r c h g e k e n n z e i c h n e t, daß das Beschickungsgut als Zusatzstoff Halogenid eines Metalls der I.–III.Gruppe des Periodensystems bei einem Massenverhältnis des Ammoniumhalogenids zum Metallhalogenid von 1:0,01 bis 1:1 zusätzlich enthält.

4. Verfahren nach Anspruch 1, d a d u r c h g e k e n n z e i c h n e t, daß bei der selbstverbreitenden Hochtemperatur-Synthese nach dem Verbrauch des Reagenssiliziums zu 40 bis 60% die Prozeßführung im Strom eines nitrierenden Mediums erfolgt.

5. Verfahren nach Anspruch 1, d a d u r c h g e k e n n z e i c h n e t, daß man als nitrierendes Medium Ammoniak verwendet.

6. Verfahren nach Anspruch 1, d a d u r c h g e k e n n z e i c h n e t, daß man als nitrierendes Medium Stickstoff verwendet.

- 21 -

7. Verfahren nach Anspruch 6, d a d u r c h  g e - k e n n z e i c h n e t, daß man als nitrierendes Medium Stickstoff im Gemisch mit 1 bis 30 Vol.% Ammoniak, Wasserstoff, Halogen, Halogenwasserstoff und Argon, die einzeln oder in Kombination miteinander genommen werden, verwendet.

8. Verfahren nach Anspruch 6, d a d u r c h  g e - k e n n z e i c h n e t, daß man Stickstoff in flüssigem Zustand verwendet.

9. Verfahren nach Anspruch 1, d a d u r c h  g e - - k e n n z e i c h n e t, daß man Metallsilizium verwendet, das vorher durch chemische beziehungsweise physikalische Einwirkung aktiviert wird.

10. Verfahren nach Anspruch 9, d a d u r c h  g e - k e n n z e i c h n e t, daß das Metallsilizium vorher mit Flußsäure behandelt.

11. Verfahren nach Anspruch 9, d a d u r c h  g e - k e n n z e i c h n e t, daß man das Metallsilizium vorher der Ultraschallwirkung aussetzt.

12. Verfahren nach Anspruch 9, d a d u r c h  g e - k e n n z e i c h n e t, daß man das Metallsilizium vorher der Stoß-Wellen-Einwirkung aussetzt.

13. Verfahren nach Anspruch 9, d a d u r c h  g e - k e n n z e i c h n e t, daß man das Metallsilizium vorher der Vibrodispergierung aussetzt.

# INTERNATIONAL SEARCH REPORT

International Application No PCT/SU 89/00086

| I. CLASSIFICATION OF SUBJECT MATTER (if several classification symbols apply, indicate all) |
|---|
| According to International Patent Classification (IPC) or to both National Classification and IPC |

IPC⁴:     C 01 B 21/068

## II. FIELDS SEARCHED

Minimum Documentation Searched

| Classification System | Classification Symbols |
|---|---|
| IPC⁴: | C 01 B 21/00, C 01 B 21/06, C 01 B 21/068 |

Documentation Searched other than Minimum Documentation
to the Extent that such Documents are Included in the Fields Searched

## III. DOCUMENTS CONSIDERED TO BE RELEVANT

| Category | Citation of Document, with indication, where appropriate, of the relevant passages | Relevant to Claim No. |
|---|---|---|
| A | US, A, 3726643, (A.G. Merzhanov etc) 10 April 1973, claims 7,9,10 (cited in the description) | 1,3 |
| A | GB, B, 1527068 (ROSENTHAL AG) 4 October 1978, page 2, lines 58-61 | 2 |
| A | US, A, 4122220 (ROSENTHAL AG) 24 October 1978, claim 1 | 2 |
| A | US, A, 4579699 (THE BOEING COMPANY), 1 April 1986, claim 7 | 5-8 |
| A | FR, A1, 2249033, (Ford France S.A.) 23 May 1975, claim 1 | 7 |
| A | GB, B, 1340696 (Joseph Lucas (Industries) Limited) 12 December 1973 | 9-13 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 8 August 1989 (08.08.89) | 4 September 1989 (04.09.89) |
| International Searching Authority | Signature of Authorized Officer |
| ISA/SU | |

Form PCT/ISA/210 (second sheet) (January 1985)